# FASCICULE DE BREVET EUROPEEN

(11) **EP 2 427 370 B1**
(45) Date de publication et mention de la délivrance du brevet: **15.07.2015**
(21) Numéro de dépôt: 10727088.6
(22) Date de dépôt: 03.05.2010
(51) Int. Cl.: B64C 11/44, F02C 7/32, H02N 10/00

(54) **GÉNÉRATEUR ÉLECTRIQUE SUR UNE PARTIE TOURNANTE DE TURBOPROPULSEUR**
ROTOR EINES PROPFAN-TRIEBWERKS MIT ELEKTRISCHEM GENERATOR
ROTOR-MOUNTED ELECTRICAL GENERATOR OF A PROPFAN ENGINE

(30) Priorité: 05.05.2009 FR 0952969
(43) Date de publication de la demande: 14.03.2012
(73) Titulaire: Airbus Operations (S.A.S.), 31060 Toulouse (FR)
(72) Inventeur: BULIN, Guillaume, F-31700 Blagnac (FR); PERRET, Severine, F-31490 Leguevin (FR); ROGERO, Jean-Michel, F-31300 Toulouse (FR)
(74) Mandataire: Gicquel, Olivier Yves Gérard
(86) Numéro de dépôt international: PCT/FR2010/050843
(87) Numéro de publication internationale: WO 2010/128241

(56) Documents cités:
- EP-A- 1 306 558
- WO-A1-01/61768
- DE-A1- 19 946 806
- DE-A1-102007 036 930
- FR-A- 1 504 078
- GB-A- 2 194 990
- US-A- 4 927 329

## Description

La présente invention relève du domaine des équipements aéronautiques. Elle concerne plus spécifiquement les générateurs de puissance électrique à bord des aéronefs. Dans le cas présent, elle vise en particulier un générateur électrique situé sur une partie tournante permettant de fournir localement l'énergie nécessaire à un système de contrôle de pas ou d'assurer la mise en drapeau des pales d'un rotor de turbopropulseur de type « propfan ».

Le contrôle du pas d'hélice est traditionnellement effectué par le biais de système mécaniques ou hydrauliques.

Il est connu qu'en cas de panne d'un propulseur à hélices lors d'un vol, les pales de cette hélice sont mises en drapeau pour minimiser la traînée générée, grâce à un mécanisme de contrôle du pas, en général monté sur l'axe de chaque pale.

Avec l'apparition des propulseurs de type « propfan », comportant deux rotors contrarotatifs, et envisagés comme propulseurs d'aéronefs commerciaux, il se pose alors le problème de la mise en place d'une redondance pour ce dispositif de mise en drapeau, et plus généralement de contrôle du pas des pales des rotors.

Une des solutions est d'installer un moteur électrique dans le rotor, au pied de chaque paie, ce moteur étant alimenté depuis la partie statique par divers moyens de transmission d'énergie. Un tel contrôle du pas des pales du rotor par un moteur électrique est notamment décrit dans le document GB-A-2 194 990.

On connaît dans ce domaine des dispositifs de contacts tournants assurant une transmission d'énergie électrique entre un axe fixe et une partie annulaire mobile par utilisation de balais électro-conducteurs fixés sur l'axe et qui viennent glisser sur une piste annulaire de la partie tournante.

Un des inconvénients principaux de ces systèmes à contacts tournants est lié à la vitesse relative des balais par rapport à la piste mobile, cette vitesse étant généralement proche de cent mètres par seconde, et fonction naturellement du diamètre de la piste annulaire et de la vitesse de rotation de cette partie.

Il s'ensuit pour tous ces systèmes à contacts tournants une usure rapide des balais, qui entraîne une réduction de leurs performances et un besoin de maintenance régulière et coûteuse. L'absence de lubrification de ces balais (pour des raisons de complexité) contribue également à réduire significativement cette durée de vie.

Dans le cas de l'hélice frontale d'un « propfan », le diamètre du coeur de la turbomachine amène une vitesse relative de la partie mobile par rapport à la partie statique de l'ordre de quatre cents mètres par seconde, ce qui rend les systèmes à balais et piste mobile inutilisables en pratique, car dépassant les spécifications des dispositifs disponibles dans le commerce.

La situation est encore aggravée dans le cas de « propfan » par le caractère contrarotatif des deux hélices.

La demande de brevet allemand déposée par M. Klaus Palme et publié sous la référence DE 199 46 806, divulgue un générateur d'énergie électrique par effet thermoélectrique capable d'utiliser une différence de température produite par différentes causes environnementales pour générer de l'énergie électrique à partir de l'énergie thermique dégagée (effet Seebeck).

La demande de brevet Internationale déposée par la Sté MOTOROLA et publiée sous la référence WO 0161768, divulgue quant à elle un générateur d'électricité par effet thermoélectrique pour aéronef destiné à être positionné de manière fixe à l'intérieur du propulseur de façon à être en contact avec une source de chaleur et un flux d'air frais de telle sorte que la chaleur diffuse à travers les modules thermoélectriques et que ceux-ci produisent de l'électricité.

La demande de brevet allemande déposée par la Sté MTU AERO ENGINES GMBH et publiée sous la référence DE 10 2007 036930 divulgue encore un propulseur d'aéronef intégrant un générateur thermoélectrique utilisant la différence de température existant entre le flux de gaz chauds qui traverse le coeur du propulseur et le flux d'air frais qui traverse un canal de dérivation d'air, le générateur étant positionné de manière fixe à l'intérieur du propulseur.

La demande de brevet français déposée par la Sté Plessey et publiée sous la référence FR 1 504 078, divulgue quant à elle un groupe propulseur combiné avec un générateur thermoélectrique positionné de manière fixe qui utilise la différence de température existant entre les gaz d'échappements chauds de la turbine à gaz du groupe propulseur et un courant d'air frais qui, dans le cas d'une turbine à gaz du type à dérivation, est constitué de préférence par l'air traversant cette dérivation et qui, dans le cas d'un moteur à turbine à gaz sans dérivation, peut être constitué judicieusement par un courant d'air obtenu à partir d'une prise d'air prévue sur le compresseur du groupe à turbine.

Ces quatre documents divulguent tous des dispositifs aptes à être intégrés dans des propulseurs d'aéronefs, de type turbopropulseur. Cependant aucun des dispositifs décrits ne permet à un élément mobile en rotation fût il intégré dans un propulseur d'aéronef, comme l'est un rotor, de produire de manière autonome l'énergie électrique dont il a besoin pour son fonctionnement, sans qu'il soit nécessaire de lui fournir cette énergie en utilisant un moyen de connexion connu, de type à contact par balai ou par charbon par exemple.

L'objectif de la présente invention est alors de proposer un dispositif de génération d'énergie électrique pour répondre aux besoins électriques d'un rotor de propulseur de type «propfan», qui évite les inconvénients pré-cités.

Un second objectif de l'invention est de proposer un dispositif de secours pour la mise en drapeau des pales du rotor, en cas de panne du dispositif principal de contrôle du pas.

A cet effet, l'invention vise un propulseur d'aéronef de type dit "propfan", comportant une turbomachine entraînant en rotation au moins un rotor, ledit rotor comprenant une pluralité de pales disposées autour d'une couronne annulaire mobile avec ces pales, ladite couronne annulaire présentant une paroi externe formant une partie de l'enveloppe externe du propulseur, ladite enveloppe externe étant soumise aux conditions atmosphériques externes au propulseur, ladite turbomachine générant un flux de gaz chauds s'échappant par une veine chaude annulaire, concentrique de la couronne annulaire mobile, et déterminée pour une partie de sa surface par la paroi interne de ladite couronne annulaire mobile, le rotor comportant un dispositif de génération d'énergie électrique pour le rotor, installé au sein de la partie annulaire mobile, et comportant des moyens pour produire de l'énergie électrique à partir de l'énergie thermique dissipée par le propulseur, et transmise à ladite couronne annulaire mobile par la veine chaude annulaire.

Préférentiellement, les moyens de production d'énergie électrique comprennent un générateur électrique composé d'un ensemble de diodes thermoélectriques utilisant l'effet Seebeck, disposées entre la paroi interne et la paroi externe de la couronne annulaire, faisant office respectivement de source chaude et de source froide de ces diodes thermoélectriques, lesdites diodes thermoélectriques étant organisées en groupements en série et en parallèle de manière à délivrer une tension et un ampérage compatible avec les besoins électriques du rotor.

Selon un mode de réalisation avantageux, les diodes thermoélectriques sont du type Pb _{0.5} Sn _{0.5} Te.

Selon un mode de réalisation avantageux, des caloducs sont disposés entre une des parois de la couronne annulaire et une face des diodes thermoélectriques.

Alternativement, le dispositif de génération d'énergie électrique pour rotor de propulseur comprend des moyens de canaliser soit de l'air chaud de la veine chaude annulaire, soit de l'air extérieur, vers une paroi sur laquelle sont disposées les diodes thermoélectriques.

On comprend qu'il est nécessaire d'accommoder la distance existant dans le propulseur entre les zones chaudes et froides en vue de leur utilisation comme sources chaudes et froides de diodes thermoélectriques.

Selon diverses dispositions éventuellement utilisées en conjonction :
- le générateur électrique d'étend de façon annulaire sur sensiblement tout le périmètre intérieur de la couronne annulaire,
- le dispositif comporte des moyens de régulation de la différence de température entre les sources chaude et froide des diodes thermoélectriques, pilotés selon les consignes d'une électronique de contrôle du courant généré par les diodes.

On comprend que cette dernière disposition permet de créer un processus de feedback maximisant en temps réel le rendement énergétique des diodes thermoélectriques.

De manière à optimiser l'utilisation de l'énergie générée par le générateur électrique, celui comporte favorablement une électronique de contrôle à laquelle toutes les diodes thermoélectriques fournissent le courant généré, cette électronique de contrôle étant adaptée à mesurer la puissance électrique disponible, et à la répartir entre les utilisateurs d'énergie électrique, et à sélectionner un mode d'alimentation cyclique desdits utilisateurs d'énergie en cas de puissance générée inférieure à un seuil prédéterminé.

Le seuil sera par exemple choisit de façon à caractériser le moment ou la puissance générée est insuffisante pour une alimentation en parallèle permanente de tous les utilisateurs.

Le propulseur selon l'invention peut également comporter un dispositif d'orientation des pales du rotor ayant des moteurs électriques de calage des pales et des moyens de contrôle de ces moteurs électriques, lesdits moteurs électriques étant alimentés en énergie par lesdits moyens de production d'énergie électrique.

L'invention vise sous un autre aspect un aéronef comportant au moins un propulseur tel qu'exposé.

La description qui va suivre, donnée uniquement à titre d'exemple d'un mode de réalisation de l'invention, est faite en se référant aux figures annexées dans lesquelles :
la figure 1 montre un propulseur de type « propfan », auquel l'invention peut être appliquée,
la figure 2 illustre en vue en coupe très schématisée un tel propulseur,
la figure 3 montre de façon schématique le principe de montage d'un générateur électrique à effet Seebeck,
la figure 4 montre la densité de puissance électrique qui peut être obtenue avec une diode thermoélectrique du commerce, selon la différence de température disponible,
la figure 5 illustre un dispositif de génération électrique pour moteur d'orientation de pales de rotor selon l'invention
la figure 6 illustre un exemple de mise en oeuvre des diodes thermoélectriques sur les deux rotors du « propfan ».

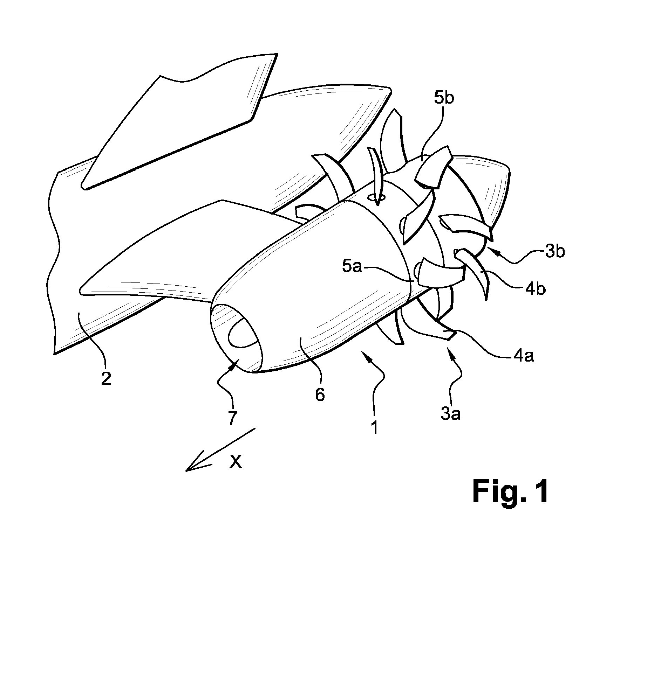

L'invention est destinée à être utilisée dans un propulseur 1 d'avion, par exemple de type dit « propfan », tel qu'illustré figure 1. De tels propulseurs sont envisagés pour des aéronefs futurs. Dans l'exemple de mise en oeuvre illustré ici, deux propulseurs « propfan » 1 sont fixés, par des mats de support, de part et d'autre de la partie arrière du fuselage 2 d'un aéronef.

Chaque propulseur « propfan » 1 comporte ici deux rotors contrarotatifs 3a, 3b comportant chacun un ensemble de pales 4a, 4b équidistantes, et disposés en partie arrière du propulseur 1. Les pales 4a, 4b de chaque rotor 3a, 3b font saillie d'une couronne annulaire 5a, 5b mobile avec ce rotor, dont la surface externe se place dans la continuité de l'enveloppe extérieure 6 du propulseur.

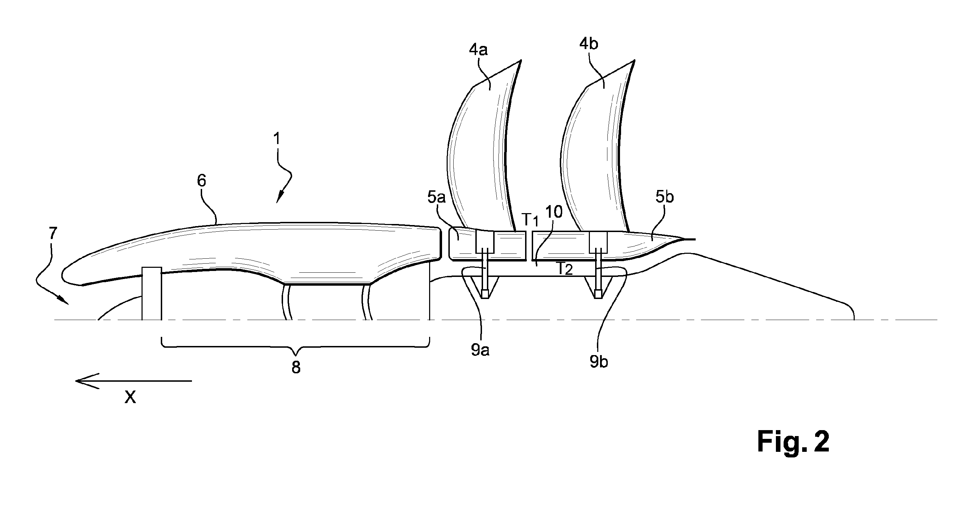

Comme on le voit sur la figure 2 de façon schématique, le propulseur «propfan» 1 comporte une entrée d'air 7 qui alimente une turbomachine 8. Cette turbomachine 8 comporte une partie axiale entraînée en rotation lorsque la turbomachine est en fonctionnement. Cet axe entraîne à son tour, par l'intermédiaire de transmissions mécaniques non illustrées figure 2, les axes 9a, 9b des pales 4a, 4b des deux rotors contrarotatifs 3a, 3b.

Les gaz chauds générés par la turbomachine 8 lors de son fonctionnement sont évacués par une veine chaude annulaire 10 dont la sortie est située à l'arrière des deux rotors 3a, 3b.

Les détails de réalisation des «propfan» et de leurs composants : rotors, turbomachine, transmission, ainsi que leurs dimensions, matériaux etc. sortent du cadre de la présente invention. Les éléments décrits ici ne sont donc donnés qu'à titre informatif facilitant la compréhension de l'invention dans un de ses exemples, nullement limitatif, de mise en oeuvre.

Ainsi qu'il ressort de la description précédente, lors du vol de l'aéronef, l'air extérieur, dont la température est comprise entre +15°C à proximité du sol et -50°C en altitude, vient circuler le long des couronnes annulaires 5a, 5b des hélices, sensiblement selon la direction opposée à l'axe longitudinal X de déplacement de l'aéronef.

Dans le même temps, les gaz circulant dans la veine chaude annulaire 10 ont une température usuellement comprise entre 600 et 800°C.

Le dispositif de dégivrage selon l'invention tire parti de cette différence de température très significative à une vingtaine de centimètres de distance en utilisant des montages à effet Seebeck, permettant la transformation d'énergie thermique en énergie électrique.

On rappelle à titre préliminaire que effet thermoélectrique (effet Seebeck) est défini par la différence de potentiel observée entre les bornes d'un conducteur lorsqu'elles sont soumises à des températures différentes. Cet effet est utilisé dans les mesures de température par thermocouples. C'est l'effet inverse de l'effet Peltier, dans lequel l'application d'une différence de potentiel entre les bornes d'un conducteur entraîne la création d'une différence de température entre ces bornes.

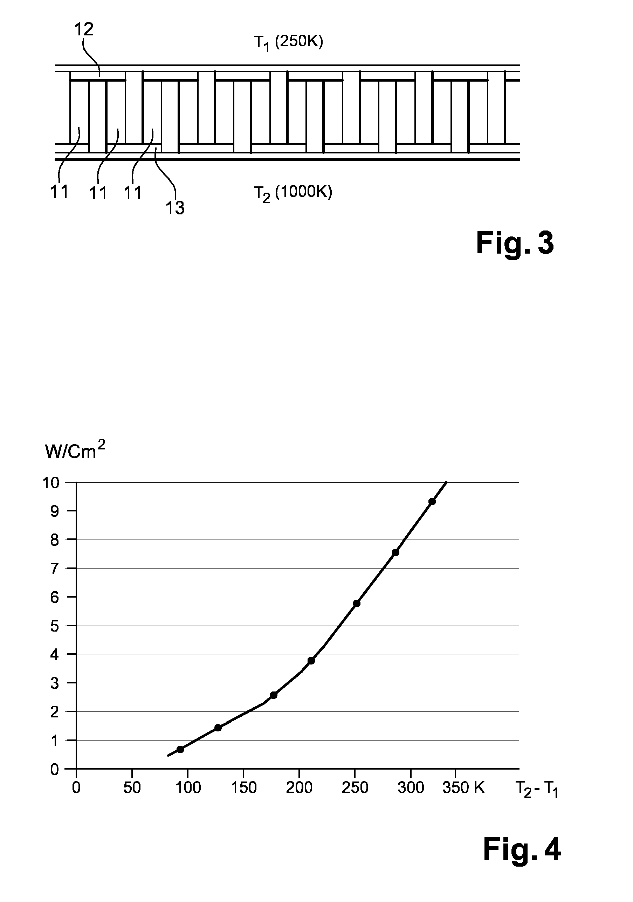

La génération de puissance électrique par effet Seebeck implique généralement de créer des circuits fermés comprenant un ensemble de conducteurs 11 reliés deux à deux par des jonctions 12, 13, soumise pour l'une d'entre elle à une première température *T1,* et, pour l'autre, à une seconde température *T2* (figure 3).

Les diverses études montrent que les matériaux fournissant le meilleur rendement thermoélectrique sont ceux qui remplissent des conditions de forte conductivité électrique, faible conductivité thermique et coefficient Seebeck élevé. On connaît actuellement plusieurs matériaux adaptés à être utilisés dans des diodes thermoélectriques. Parmi ceux-ci on peut citer le Tellurure de Cadmium Mercure (Hg _{0.86} Cd _{0.14} Te), le tellurure de Bismuth (Bi₂ Te₃), des nano-fils de Silicium etc.

Il est également à noter que les matériaux thermoélectriques présentent des caractéristiques favorables chacun dans une plage de températures donnée (le Tellure de Plomb vers 550 - 750 K, le Tellurure de Bismuth vers 250 - 350K etc.). Il est donc avantageux, dans les cas où la différence de température entre les zones chaudes (*T2*) et froide (*T1*), ce qui est par exemple le cas dans le présente exemple de mise en oeuvre sur un propulseur « Propfan » (*T1* voisin de 250 K, et *T2* voisin de 1000 K), d'utiliser plusieurs matériaux superposés pour constituer chaque conducteur 11.

Le rendement de conversion entre énergie thermique et énergie électrique est actuellement de l'ordre de 30% du rendement de Carnot idéal, pour une différence de température de 300K entre la zone chaude et la zone froide, ce qui correspond à un rendement théorique de 13% environ (conversion de 13% de l'énergie thermique en énergie électrique). Avec une différence de température de 700 K, un rendement de 18% est obtenu.

Du fait des caractéristiques de masse des diodes commerciales, un rendement de 30% du Carnot idéal correspond à une puissance massique de 1000 watts / kg de diodes installées.

La figure 4 illustre, pour une diode thermoélectrique du commerce de type Pb _{0.5} Sn _{0.5} Te, la densité de puissance électrique qui peut être obtenue par unité de surface selon la différence de température disponible. On constate que pour des valeurs d'écart de température de l'ordre de 350K, une puissance électrique de 10 watts / cm² peut être obtenue.

Ces valeurs démontrent la compatibilité de l'utilisation de diodes thermoélectriques avec les contraintes de dimensions, de volume et masse disponible et de puissance électrique nécessaire pour la mise en drapeau des pales d'un rotor de propulseur de type « propfan ».

Celui-ci génère en effet environ 200 kW de puissance thermique évacuée par la veine chaude annulaire 10.

La mise en drapeau des pales d'un rotor du «propfan» nécessite quant-à-elle environ 5 kW de puissance électrique. La mise en drapeau des pales des deux rotors 3a, 3b du « propfan » nécessite donc 10 kW.

La masse de diodes thermoélectriques nécessaire à la fourniture de cette puissance électrique est donc d'environ 10 kg. Cette valeur est compatible avec les contraintes de masse existant sur les aéronefs, ainsi qu'avec les contraintes volumiques liées à la conception des rotors de « propfans ». Chaque couronne annulaire 5a, 5b présente en effet une paroi interne 15a, 15b, et une paroi externe 14a, 14b distantes d'une vingtaine de centimètres environ, pour un diamètre interne de la couronne annulaire 5a, 5b de plusieurs dizaines de centimètres et une largeur de la couronne annulaire 5a, 5b (selon l'axe longitudinal X) de quelques dizaines de centimètres.

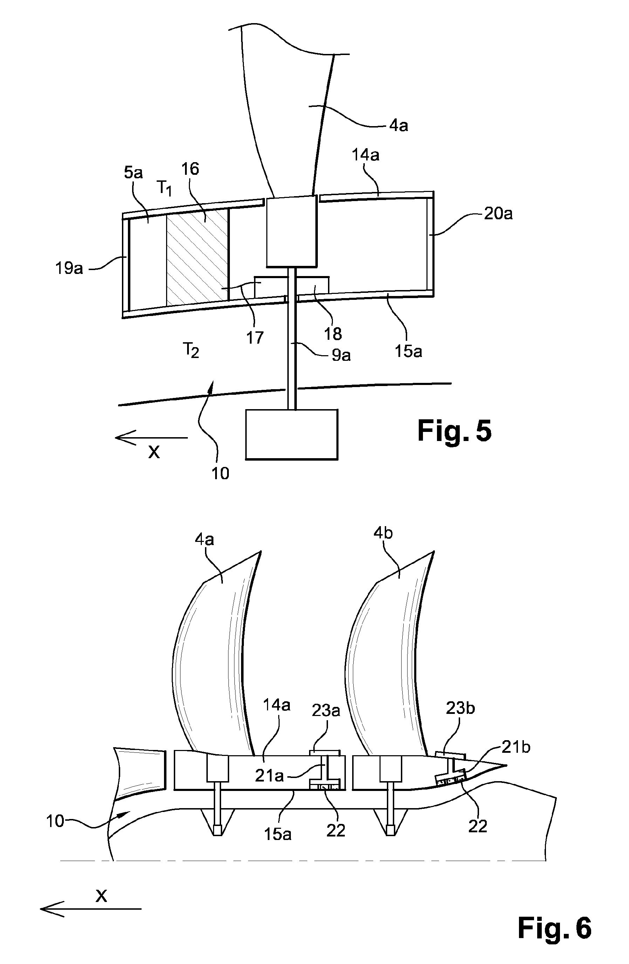

Le dispositif de génération électrique pour rotor selon l'invention (figure 5) est ici décrit pour le rotor avant 3a du propulseur envisagé. Un dispositif identique est envisagé pour le rotor arrière 3b. Le dispositif utilise l'espace disponible au sein de la couronne annulaire 5a de chaque rotor 3a pour y disposer un générateur électrique 16 à diodes thermoélectriques 22.

Le générateur électrique 16 est composé d'un ensemble de diodes thermoélectriques 22 disposées entre la paroi interne 15a et la paroi externe 14a de la couronne annulaire 5a. La figure 6 illustre un exemple de mise en oeuvre de ces diodes thermoélectriques 22 sur les deux rotors 3a, 3b du « propfan ».

Les diodes thermoélectriques 22 considérées sont par exemple du type Pb _{0.5} Sn _{0.5} Te, délivrant un rendement de 13% environ.

Selon l'épaisseur normale de fonctionnement des diodes thermoélectriques 22 considérées entre source froide (la paroi externe 14a, 14b de chaque couronne annulaire 5a, 5b) et source chaude (la paroi interne 15a, 15b de chaque couronne annulaire 5a, 5b face à la veine chaude annulaire 10), des caloducs 21 de type connu sont disposés entre une des parois de la couronne annulaire 5a et une face des diodes thermoélectriques 22. Du côté de la source froide, le dispositif comprend avantageusement un puits thermique 23, par exemple sous la forme de lames métalliques parallèles au flux d'air (c'est-à-dire à l'axe longitudinal de l'aéronef) créant une grande surface d'échange thermique avec l'environnement extérieur.

Il est clair qu'en variante, il est loisible d'inverser cette disposition. On dispose alors les diodes thermoélectriques 22 au voisinage de la paroi externe 14a, 14b de chaque couronne annulaire 5a, 5b. Dans ce cas, les puits thermiques 23 sont disposés au sein de la veine chaude annulaire 10, sur la paroi interne 15a, 15b de chaque couronne annulaire 5a, 5b, et les caloducs 21 servent à conduire la chaleur de cette source chaude vers les diodes thermoélectrique 22.

Ces diodes thermoélectriques 22 sont organisées en groupements en série et en parallèle par des moyens connus en soi pour obtenir en sortie du générateur électrique 16 une tension et un ampérage compatible avec les besoins électriques du rotor et typiquement les besoins liés à la mise en drapeau des pales 4a du rotor 3a.

Préférentiellement, les deux parois 14a, 15a de la couronne annulaire 5a (respectivement les parois 14b, 15b de la couronne annulaire 5b) sont réalisées en matériau métallique, ou en tout état de cause très bon conducteur thermique. La paroi interne 15a est par exemple réalisée en titane, et la paroi externe 14a en aluminium. Les parois latérales 19a, 20a de cette couronne annulaire 5a sont réalisées en matériau de faible conductivité thermique, de manière à ce que le flux thermique passe préférentiellement par les diodes thermoélectriques 22.

Dans la mise en oeuvre considérée ici à titre d'exemple, le générateur électrique 16 d'étend de façon annulaire sur tout le périmètre intérieur et sur une largeur de dix centimètres environ de la couronne annulaire 5a.

Dans le cas d'un rotor 3a comprenant 12 pales 4a, chaque secteur de 30° du générateur électrique 16 alimente un moteur en énergie électrique avec une puissance d'environ 1 kW en vue de l'orientation d'une pale. La masse de diodes thermoélectriques 22 représentée est de l'ordre de 1 kg par secteur de 30° de la couronne annulaire 5a. Plus généralement, pour n pales, chaque secteur de 360°/*n* alimente un moteur correspondant à une pale 4a en énergie électrique.

Le dispositif comprend par ailleurs un ensemble de câbles 17 destinés à transférer l'énergie électrique générée vers au moins un accumulateur de type connu (non illustré figure 5), destiné à stocker l'énergie produite par le générateur électrique 16, et un moteur de contrôle de pas pour chaque pale 4a du rotor 3a.

Les moteurs électriques 18 sont de type connu en soi. Chaque moteur électrique 18 est disposé à proximité de l'axe 9a d'une pale 4a, la transmission d'effort se faisant par engrenage ou autre moyen connu.

Le dispositif comprend également une électronique de contrôle (non représentée sur la figure 5).

En fonctionnement, le rendement du générateur électrique 16 devient significatif dès que la turbomachine 8 est mise en marche, la différence de température *T2 - T1* étant déjà, au sol, de plusieurs centaines de degrés K.

En cas de nécessité déterminée par l'équipage de l'avion, ou par un dispositif automatisé, l'électronique de contrôle des moteurs de calage des pales envoie un ordre de mise en drapeau simultané à tous ces moteurs 18. La puissance nécessaire, éventuellement très supérieure à la puissance générée par le générateur électrique 16, est fournie par les accumulateurs.

Il ressort de la description que le générateur électrique selon l'invention permet de s'affranchir des problèmes posés par les contacts tournants rapides de l'art antérieur. Il utilise une ressource énergétique perdue en tirant parti de la chaleur dégagée par le propulseur qui vient passer sous la couronne du rotor.

Le générateur électrique selon l'invention fournit un système de secours pour la mise en drapeau des pales des rotors du propulseur.

Par ailleurs, l'absence de pièces mobiles dans ce générateur électrique se traduit en une fiabilité augmentée.

Enfin, il ne nécessite pas de modification significative du propulseur pour son installation.

La portée de la présente invention ne se limite pas aux détails des formes de réalisation ci-dessus considérées à titre d'exemple, mais s'étend au contraire aux modifications à la portée de l'homme de l'art.

Dans une variante, à la place de caloducs 21 destinés à réduire la distance entre la source chaude (paroi interne 15a de la couronne annulaire 5a) et la source froide (paroi externe 14a de la couronne annulaire 5a) pour faciliter la mise en place des diodes thermoélectriques 22, on utilise des conduits canalisant soit de l'air chaud de la veine chaude annulaire 10, soit de l'air extérieur, vers une paroi sur laquelle sont disposées les diodes thermoélectriques 22.

Dans une autre variante, un dispositif de régulation de température entre les sources chaude et froide des diodes thermoélectriques 22 est intégré. En effet, ces diodes thermoélectriques 22 ont un point de rendement optimal pour une différence de température donnée, et tout écart à cette différence de température se traduit par une baisse de courant électrique généré.

Un tel dispositif de régulation peut comporter des conduits d'air mitigeant de l'air chaud et de l'air froid vers la source chaude des diodes thermoélectriques 22, selon les consignes d'une électronique de contrôle du courant généré par les diodes. Ceci créé un dispositif de feedback qui maximise en temps réel le rendement énergétique des diodes thermoélectriques 22, quel que soient leur vieillissement et l'évolution de leur point de rendement maximal.

Il a été mentionné dans la description que chaque moteur de mise en drapeau d'une pale 4a était alimenté par un secteur des diodes thermoélectriques 22. Alternativement, on choisit plutôt, à titre de redondance, que toutes les diodes thermoélectriques 22 fournissent le courant généré à une même électronique de contrôle, qui mesure la puissance électrique disponible, et la répartit entre les divers utilisateurs d'énergie électrique du rotor 3a considéré, voire sélectionne un mode d'alimentation cyclique desdits utilisateurs d'énergie en cas de puissance générée insuffisante pour une alimentation en parallèle permanente de tous ces utilisateurs.

De la même manière, l'électronique de contrôle communique, par des moyens non détaillés ici car sortant du cadre de la présente invention, la puissance générée par les diodes thermoélectriques 22 à destination de l'équipage avion.

Par ailleurs, on peut envisager que le système de génération électrique de secours proposé dans la description ci-dessus soit utilisé comme source principale d'électricité pour le dispositif de régulation des pales.

## Revendications

1. Propulseur d'aéronef (1) de type dit "propfan", comportant une turbomachine (8) entraînant en rotation au moins un rotor (3a), ledit rotor comprenant une pluralité de pales (4a) disposées autour d'une couronne annulaire (5a) mobile avec ces pales,
ladite couronne annulaire (50) présentant une paroi externe (14a) formant une partie de l'enveloppe externe du propulseur, ladite enveloppe externe (6) étant soumise aux conditions atmosphériques externes au propulseur,
ladite turbomachine (8) générant un flux de gaz chauds s'échappant par une veine chaude annulaire (10), concentrique de la couronne annulaire mobile (5a), et déterminée pour une partie de sa surface par la paroi interne (15a) de ladite couronne annulaire mobile (5a),
**caractérisé en ce que** ledit rotor comporte en outre un dispositif de génération d'énergie électrique pour le rotor, installé au sein de ladite couronne annulaire mobile (5a), et comportant des moyens (16) pour produire de l'énergie électrique à partir de l'énergie thermique dissipée par le propulseur, et transmise à ladite couronne annulaire mobile (5a) par la veine chaude annulaire (10).

2. Propulseur d'aéronef selon la revendication 1, **caractérisé en ce que** les moyens (16) de production d'énergie électrique comprennent un ensemble de diodes thermoélectriques (22) utilisant l'effet Seebeck, disposées entre la paroi interne (15a) et la paroi externe (14a) de la couronne annulaire (5a), faisant office respectivement de source chaude et de source froide de ces diodes thermoélectriques (22), lesdites diodes thermoélectriques (22) étant organisées en groupements en série et en parallèle de manière à délivrer une tension et un ampérage compatibles avec les besoins électriques du rotor (3a).

3. Propulseur d'aéronef selon la revendication 2, **caractérisé en ce que** les diodes thermoélectriques (22) sont du type Pb 0.5 Sn 0.5 Te.

4. Propulseur d'aéronef selon l'une quelconque des revendications 2 à 3, **caractérisé en ce que** ledit dispositif de génération d'énergie électrique comporte des caloducs (21) disposés entre une des parois de la couronne annulaire (5a) et une face des diodes thermoélectriques (22).

5. Propulseur d'aéronef selon l'une quelconque des revendications 2 à 3, **caractérisé en ce qu'**il comprend des moyens de canaliser soit de l'air chaud de la veine chaude annulaire (10), soit de l'air extérieur, vers une paroi sur laquelle sont disposées les diodes thermoélectriques (22).

6. Propulseur d'aéronef selon l'une quelconque des revendications 2 à 5, **caractérisé en ce que** le générateur électrique (16) d'étend de façon annulaire sur sensiblement tout le périmètre intérieur de la couronne annulaire (5a).

7. Propulseur d'aéronef selon l'une quelconque des revendications 2 à 6, **caractérisé en ce qu'**il comporte des moyens de régulation de la différence de température entre les sources chaude et froide des diodes thermoélectriques (22), pilotés selon les consignes d'une électronique de contrôle du courant généré par les diodes thermoélectriques (22).

8. Propulseur d'aéronef selon l'une quelconque des revendications 2 à 7, **caractérisé en ce qu'**il comporte une électronique de contrôle à laquelle toutes les diodes thermoélectriques (22) fournissent le courant généré, cette électronique de contrôle étant adaptée à mesurer la puissance électrique disponible, et à la répartir entre les utilisateurs d'énergie (4a), et à sélectionner un mode d'alimentation cyclique des utilisateurs d'énergie (4a) en cas de puissance générée inférieure à un seuil prédéterminé.

9. Propulseur d'aéronef (1) selon l'une quelconque des revendications précédentes,
**caractérisé en ce qu'**il comporte un dispositif d'orientation des pales (4a) du rotor (3a), comportant :
- des moteurs électriques de calage des pales (4a) du rotor (3a),
- des moyens de contrôle de ces moteurs électriques,
lesdits moteurs électriques étant alimentés en énergie par lesdits moyens (16) de production d'énergie électrique.

10. Aéronef, **caractérisé en ce qu'**il comporte au moins un propulseur d'aéronef selon l'une quelconque des revendications 1 à 9.

## Patentansprüche

1. Luftfahrzeugantrieb (1) von der Art "Propfan", der ein Turbinentriebwerk (8) aufweist, das mindestens einen Rotor (3a) in Drehung versetzt, wobei der Rotor eine Vielzahl von Blättern (4a) enthält, die um einen mit diesen Blättern beweglichen ringförmigen Kranz (5a) angeordnet sind,
wobei der ringförmige Kranz (5a) eine Außenwand (14a) aufweist, die einen Teil der Außenhülle des Antriebs bildet, wobei die Außenhülle (6) den Witterungsverhältnissen außerhalb des Antriebs ausgesetzt ist,
wobei das Turbinentriebwerk (8) einen Warmgasstrom erzeugt, der durch einen ringförmigen Warmkanal (10) austritt, welcher zum beweglichen ringförmigen Kranz (5a) konzentrisch ist und für einen Teil seiner Fläche durch die Innenwand (15a) des beweglichen ringförmigen Kranzes (5a) bestimmt wird,
**dadurch gekennzeichnet, dass** der Rotor außerdem eine Vorrichtung zur Erzeugung elektrischen Energie für den Rotor aufweist, die innerhalb des beweglichen ringförmigen Kranzes (5a) eingebaut ist und Einrichtungen (16) aufweist, um ausgehend von der vom Antrieb abgestrahlten und durch den ringförmigen Warmkanal (10) an den beweglichen ringförmigen Kranz (5a) übertragenen Wärmeenergie elektrische Energie zu erzeugen.

2. Luftfahrzeugantrieb nach Anspruch 1, **dadurch gekennzeichnet, dass** die Einrichtungen (16) zur Erzeugung elektrischer Energie eine Einheit von den Seebeck-Effekt verwendenden thermoelektrischen Dioden (22) enthalten, die zwischen der Innenwand (15a) und der Außenwand (14a) des ringförmigen Kranzes (5a) angeordnet sind, welche als Warmquelle bzw. Kaltquelle dieser thermoelektrischen Dioden (22) dienen, wobei die thermoelektrischen Dioden (22) in Gruppen in Reihe und parallel angeordnet sind, um eine Spannung und eine Stromstärke zu liefern, die mit den elektrischen Anforderungen des Rotors (3a) kompatibel sind.

3. Luftfahrzeugantrieb nach Anspruch 2, **dadurch gekennzeichnet, dass** die thermoelektrischen Dioden vom Typ Pb0.5 Sn0.5 Te sind.

4. Luftfahrzeugantrieb nach einem der Ansprüche 2 bis 3, **dadurch gekennzeichnet, dass** die Vorrichtung zur Erzeugung elektrischer Energie Wärmeleitrohre (21) aufweist, die zwischen einer der Wände des ringförmigen Kranzes (5a) und einer Seite der thermoelektrischen Dioden (22) angeordnet sind.

5. Luftfahrzeugantrieb nach einem der Ansprüche 2 bis 3, **dadurch gekennzeichnet, dass** er Einrichtungen enthält, um entweder Warmluft des ringförmigen Warmkanals (10) oder Außenluft zu einer Wand zu kanalisieren, auf der die thermoelektrischen Dioden (22) angeordnet sind.

6. Luftfahrzeugantrieb nach einem der Ansprüche 2 bis 5, **dadurch gekennzeichnet, dass** der elektrische Generator (16) sich ringförmig über im Wesentlichen den ganzen Innenumfang des ringförmigen Kranzes (5a) erstreckt.

7. Luftfahrzeugantrieb nach einem der Ansprüche 2 bis 6, **dadurch gekennzeichnet, dass** er Einrichtungen zur R e gulierung des Temperaturunterschieds zwischen der Warmquelle und der Kaltquelle der thermoelektrischen Dioden (22) aufweist, die gemäß den Anweisungen einer Regelungselektronik des von den thermoelektrischen Dioden (22) erzeugten Stroms gesteuert werden.

8. Luftfahrzeugantrieb nach einem der Ansprüche 2 bis 7, **dadurch gekennzeichnet, dass** er eine Regelungselektronik aufweist, an die alle thermoelektrischen Dioden (22) den erzeugten Strom liefern, wobei diese Regelungselektronik geeignet ist, die verfügbare elektrische Leistung zu messen und sie zwischen den Energienutzern (4a) zu verteilen, und im Fall einer erzeugten Leistung unterhalb einer vorbestimmten Schwelle einen zyklischen Versorgungsmodus der Energienutzer (4a) auszuwählen.

9. Luftfahrzeugantrieb (1) nach einem der vorhergehenden Ansprüche, **dadurch gekennzeichnet, dass** er eine Ausrichtvorrichtung der Blätter (4a) des Rotors (3a) aufweist, die aufweist:
- Elektromotoren zur Einstellung der Blätter (4a) des Rotors (3a),
- Einrichtungen zur Regelung dieser Elektromotoren,
wobei die Elektromotoren von den Einrichtungen (16) zur Erzeugung elektrischer Energie mit Energie versorgt werden.

10. Luftfahrzeug, **dadurch gekennzeichnet, dass** es mindestens einen Luftfahrzeugantrieb nach einem der Ansprüche 1 bis 9 aufweist.

## Claims

1. Aircraft propulsive unit (1) of so-called "propfan" type, comprising a turbine engine (8) rotationally driving at least one rotor (3a), said rotor comprising a plurality of blades (4a) arranged around an annular crown ring (5a) that moves with these blades,
said annular crown ring (5a) having an outer wall (14a) forming a part of the outer jacket of the propulsive unit, said outer jacket (6) being subject to the atmospheric conditions external to the propulsive unit,
said turbine engine (8) generating a flow of hot gases exhausted through an annular hot duct (10), concentric to the mobile annular crown ring (5a), and determined, for a part of its surface, by the inner wall (15a) of said mobile annular crown ring (5a),
**characterized in that** said rotor further comprises a device for generating electrical energy for the rotor, installed within said mobile annular crown ring (5a), and comprising means (16) for producing electrical energy from the thermal energy dissipated by the propulsive unit, and transmitted to said mobile annular crown ring (5a) by the annular hot duct (10).

2. Aircraft propulsive unit according to Claim 1, **characterized in that** the electrical energy production means (16) comprise a set of thermoelectric diodes (22) using the Seebeck effect, positioned between the inner wall (15a) and the outer wall (14a) of the annular crown ring (5a), serving respectively as hot source and as cold source for these thermoelectric diodes (22), said thermoelectric diodes (22) being organized in series and parallel groupings so as to deliver a voltage and an amperage that are compatible with the electrical needs of the rotor (3a).

3. Aircraft propulsive unit according to Claim 2, **characterized in that** the thermoelectric diodes (22) are of Pb 0.5 Sn 0.5 Te type.

4. Aircraft propulsive unit according to either of Claims 2 and 3, **characterized in that** said electrical energy generation device comprises heat pipes (21) positioned between one of the walls of the annular crown ring (5a) and a face of the thermoelectric diodes (22).

5. Aircraft propulsive unit according to either of Claims 2 and 3, **characterized in that** it comprises means for channelling either hot air from the annular hot duct (10), or outside air, to a wall on which the thermoelectric diodes (22) are positioned.

6. Aircraft propulsive unit according to any one of Claims 2 to 5, **characterized in that** the electrical generator (16) extends annularly over substantially all the internal perimeter of the annular crown ring (5a).

7. Aircraft propulsive unit according to any one of Claims 2 to 6, **characterized in that** it comprises means for regulating the temperature difference between the hot and cold sources of the thermoelectric diodes (22), controlled according to the set points of electronic circuitry for controlling the current generated by the thermoelectric diodes (22).

8. Aircraft propulsive unit according to any one of Claims 2 to 7, **characterized in that** it comprises control electronic circuitry to which all the thermoelectric diodes (22) supply the current generated, this control electronic circuitry being adapted to measure the available electrical power, and to distribute it between the energy users (4a), and to select a cyclic power supply mode for the energy users (4a) in the case of generated power being below a predetermined threshold.

9. Aircraft propulsive unit (1) according to any one of the preceding claims,
**characterized in that** it comprises a device for orienting the blades (4a) of the rotor (3a), comprising:
- electric motors for setting the blades (4a) of the rotor (3a),
- control means for these electric motors,
said electric motors being supplied with energy by said electrical energy production means (16).

10. Aircraft, **characterized in that** it comprises at least one aircraft propulsive unit according to any one of Claims 1 to 9.
